Europäisches Patentamt

European Patent Office

Office européen des brevets

(11) Publication number: **0 104 927**
**B1**

(12) # EUROPEAN PATENT SPECIFICATION

(45) Date of publication of patent specification: **16.12.87**

(21) Application number: **83305743.3**

(22) Date of filing: **26.09.83**

(51) Int. Cl.⁴: $C\ 08\ B\ 37/00$, $C\ 08\ L\ 5/00$,
$E\ 21\ B\ 43/26$, $E\ 21\ B\ 33/138$

(54) **Method and compositions for fracturing subterranean formations.**

(30) Priority: **27.09.82 US 423577**
**27.09.82 US 423573**
**27.09.82 US 423576**

(43) Date of publication of application:
**04.04.84 Bulletin 84/14**

(45) Publication of the grant of the patent:
**16.12.87 Bulletin 87/51**

(84) Designated Contracting States:
**DE FR GB NL**

(56) References cited:
**US-A-2 894 966**
**US-A-3 888 312**
**US-A-4 313 834**

**OIL & GAS JOURNAL, vol. 80, no. 37,
September 1982, pages 84,89, Tulsa,
Oklahoma, USA G.J. RUMMO: "Crosslinking
delay achieved with gel additive"**

(73) Proprietor: **HALLIBURTON COMPANY**
**P.O. Drawer 1431**
**Duncan Oklahoma 73536 (US)**

(72) Inventor: **Hollenbeak, Keith Harold**
**Route 5 Box 447A**
**Duncan Oklahoma (US)**
Inventor: **Githens, Charles Jackson**
**1604 North Ridge**
**Duncan Oklahoma (US)**
Inventor: **Conway, Michael Wayne**
**1501 Cedar**
**Duncan Oklahoma (US)**

(74) Representative: **Wain, Christopher Paul et al
A.A. THORNTON & CO. Northumberland House
303-306 High Holborn
London WC1V 7LE (GB)**

Courier Press, Leamington Spa, England.

## Description

This invention relates to methods and compositions for the hydraulic fracturing of subterranean formations.

In the drilling, completion and treatment of subterranean formations penetrated by well bores, viscous treating fluids are commonly utilized. In such operations, it is often desirable and sometimes necessary that the viscous treating fluids should have relatively low initial viscosities but that their viscosities should increase when they are placed in the well bore or subterranean formation to be treated. For example, in performing a subterranean fracturing process on a hydrocarbon-bearing formation to stimulate the production of hydrocarbons therefrom, a treating fluid which has a low viscosity and a low friction pressure when being pumped but which exhibits a high viscosity in the formation, is desirable.

Generally, in the art of hydraulic fracturing, a fluid is introduced through a conduit, such as tubing or casing disposed in the well bore, into a formation sought to be fractured. The fluid is introduced at a rate and pressure sufficient to produce a fracture or fractures in the formation and to extend the produced fracture or fractures from the well bore into the formation. Upon the creation of the fracture or fractures, additional fracturing fluid containing solid proppant materials can be introduced into the fracture or fractures in the event the initial fluid did not contain any proppant. Following this treatment, the introduced fluid is recovered from the formation, but the proppant remains in the produced fracture or fractures to thereby prevent the complete closure thereof. The propped fracture creates a conductive channel extending from the well bore into the formation.

The conductivity of a propped fracture is affected by the particle size of the proppant material placed in the fracture. The particle size of the proppant that can be used depends upon the width to which the particular fracture can be opened during the introduction of the fracturing fluid. The fracture width normally is directly proportional to the viscosity of the fracturing fluid. In addition, the use of fracturing fluids having relatively high viscosities is advantageous since such fluids can support the proppant particles suspended therein without excessive settling. The use of such high viscosity fluids also permits the placement of relatively large-size proppant material in the fracture without a screenout occurring, that is, without the proppant bridging across the mouth of the fracture and preventing the introduction of proppant therein. Such fluids are known from U.S.—A—3888312 which discloses a crosslinked aqueous gel containing a solvatable polysaccharide gelling agent and organotitanium (IV) compound crosslinking agent. This fluid is substantially immediately crosslinked and made to reach the formation by virtue of shear forces during turbulent flow.

The use of desirably high viscosity fracturing fluids is unfortunately accompanied by the problem of high friction losses usually encountered during the introduction of such fluids into a formation through the conduit, such as tubing or casing, disposed in the well bore. Since the pumping equipment and tubular goods are limited in capacity and operating pressure, the viscosity of the fluid being pumped also is limited. The viscosity of the fluid must be low enough that excessive friction losses and high well head pumping pressures are not encountered.

In Oil and Gas Journal, Volume 80, September 13th, 1982, page 80, the use of metal crosslinked hydroxypropyl guar fracturing fluids is described. It is disclosed that small quantities of 2,4-pentanedione added directly to a hydroxypropyl guar base gel, will delay crosslinking substantially, upon introduction of the metal chelate crosslinking agent.

We have now found that the crosslinking of various aqueous gels for use in subterranean formations can be suitably delayed by using certain polyhydroxyl-containing compounds or certain carboxylic acids as crosslinking retarders. In this way, viscous treating fluids can be made which have an initial viscosity such that solid proppants can be suspended therein and carried thereby without excessive settling, but wherein the viscosity of the fluid is not so high that excessive friction losses are encountered in pumping the fluid, and wherein the viscosity of the fluid is arranged to increase after a given time, i.e. to increase after the fluid has been introduced into the well.

According to the present invention, there is provided an aqueous gel comprising: an aqueous fluid comprising water and, optionally, up to 80 percent by volume of alcohol; a gelling agent comprising a solvatable polysaccharide of molecular weight not less than 100,000; and a crosslinking agent comprising an organotitanate chelate; characterised in that the gel further comprises a retarding agent comprising at least one polyhydroxyl-containing compound capable of retarding the action of said crosslinking agent upon said gelling agent, or at least one of citric acid, malic acid, succinic acid, tartaric acid, glucuronic acid, gluconic acid, ascorbic acid, alpha-keto glutaric acid, or isoascorbic acid, and wherein the amount of gelling agent is not less than 0.2% by weight of the aqueous fluid.

The invention also includes a process for hydraulically fracturing a subterranean formation penetrated by a well bore which comprises: preparing a base gel by mixing an aqueous fluid comprising water and, optionally, up to 80 percent by volume of alcohol, with a gelling agent, preferably a solvatable polysaccharide having a molecular weight of at least about 100,000; admixing therewith a crosslinking composition comprising

(i) at least one crosslinking agent comprising an organotitanate chelate; and

(ii) an aqueous fluid; and introducing said cross-linked aqueous gel into said formation from said well

**0 104 927**

bore at a flow rate and pressure sufficient to produce a fracture in said formation; characterised in that: the crosslinking composition also comprises

(iii) a retarding agent comprising at least one polyhydroxyl compound capable of retarding the action of said crosslinking agent upon said gelling agent, or at least one of citric acid, malic acid, succinic acid, tartaric acid, glucuronic acid, gluconic acid, ascorbic acid, alpha-keto glutaric acid, or isoascorbic acid; and the aqueous fluid is preferably present in said crosslinking composition in a volumetric ratio of the crosslinking agent to the retarding agent to the aqueous fluid, respectively, of from 1:0.05:0.5 to 1:10:10; and wherein said base gel reacts with said crosslinking agent after a controllable period of time to form a crosslinked aqueous gel, at least a portion of the delay in the rate of said reaction resulting from the presence of said retarding agent and aqueous fluid in said crosslinking composition.

In accordance with the present invention, the aqueous gel preferably has a non-Newtonian viscosity in laminar flow, such as in subterranean formations, of from about 100 centipoise (0.1 Pa s) to in excess of 1,000 centipoise (1 Pa s) at 170 $sec^{-1}$ shear rate. However, during introduction of the aqueous gel into the formation through a conduit in which the fluid is in turbulent flow, the viscosity is no greater than that imparted by the gelling agent before crosslinking. The aqueous gel of the present invention can carry large quantities of proppants into a formation sought to be fractured and can be introduced into the formation at suitably high rates with pumping equipment and tubular goods normally available at the wellhead.

The aqueous fluid utilized herein can advantageously contain up to 80%, and preferably from about 0 to 40 percent, and most preferably from about 0 to 10 percent, alcohol by volume of the solution. The preferred alcohols are alkanols having from 1 to 5 carbon atoms. Examples of alcohols useful in the aqueous fluid include methanol, ethanol, propanol, isopropanol, butanol, isobutanol, pentanol, furfuryl alcohol, ethylene glycol, and ethoxylated derivatives thereof.

The aqueous fluid is used to solvate the gelling agent. The solvated gelling agent is referred to hereinafter as a "base gel". The pH of the aqueous fluid can be adjusted, if necessary, to render the fluid compatible with the crosslinking agent used to crosslink the solvated gelling agent. The pH adjusting material can be added to the aqueous fluid before, after, or during addition of the gelling agent to the aqueous fluid.

The gelling agent useful in the present invention is selected from solvatable polysaccharides having molecular weights of at least 100,000. Examples of polysaccharides useful herein include the galactomannan gums, glucomannan gums, and their derivatives. Solvatable galactomannan and glucomannan gums are naturally occurring. The galactomannan gums and glucomannan gums also can be reacted with hydrophilic constituents to thereby produce gelling agents useful herein.

Solvatable polysaccharides having molecular weights of less than about 100,000 do not form crosslinked gels which are useful herein. The most preferred solvatable polysaccharides useful herein have molecular weights in the range of from about 200,000 to about 3,000,000.

Guar gum, locust bean gum, karaya gum, sodium carboxymethylguar, hydroxyethylguar, sodium carboxymethylhydroxyethylguar, hydroxypropylguar and sodium carboxymethylhydroxypropylguar are examples of gelling agents useful herein.

The preferred gelling agents are guar gum, hydroxypropylguar and sodium carboxymethylhydroxypropylguar. The most preferred gelling agent is hydroxypropylguar.

The gelling agent useful herein is present in the aqueous fluid in a concentration of not less than 0.2% by weight of the aqueous fluid, and preferably in the range of from about 0.2 to about 1.25 percent, preferably from about 0.2 to about 1.0 percent, most preferably from about 0.4 to about 0.7 percent, by weight of the aqueous fluid. A gelling agent concentration of less than about 0.2 percent by weight of the aqueous fluid is not a sufficient quantity of gelling agent to permit effective crosslinking of the gel within the formation.

The crosslinking compounds of the present invention feature the presence of titanium in the +4 oxidation state and are referred to as organotitanate chelates. An example of a titanium (IV)-containing cross-linking agent useful herein is titanium-ammonium lactate chelate which is available from E. I. duPont de Nemours and Company, Inc. under the trademark Tyzor® LA. Other examples of an organotitanate chelates useful herein are titaniumtriethanolamine chelate and titanium acetylacetonate chelate. These chelates also are available from E. I. duPont de Nemours and Company, Inc. under the trademark Tyzor® TE and Tyzor® AA, respectively.

The crosslinking mechanism is not fully understood. However, it is believed that the titanium does not experience any sort of valence change during the crosslinking reaction.

The amount of crosslinking agent useful to crosslink the gelling agent of this invention is that which provides a titanium ion concentration in the range of from about 0.0005 percent to in excess of about 0.01 percent by weight of the aqueous fluid. The preferred concentration is in the range of from about 0.0015 percent to about 0.01 percent by weight and, most preferably, from about 0.003 percent to about 0.006 percent by weight of the aqueous fluid. It is convenient, and thus preferred, to admix the base gel with a solution of the crosslinking agent. The solution is, broadly, any aqueous solution which does not adversely react with the gelling agent, crosslinking agent, or retarding agent to prevent the formation of the aqueous gel of the invention. Convenient crosslinking agent solutions are in the range of from about 0.5 percent to about 50 percent of crosslinking agent by weight of solution. Appropriate calculations then are required,

3

based upon the solution concentrations, to determine the quantity of solution necessary to provide the desired quantity of crosslinking agent in the aqueous gel.

The rate of the crosslinking reaction is extremely rapid. At ambient temperature conditions, the organotitanate chelates comprising the crosslinking agent can crosslink the polysaccharides comprising the gelling agent in as little as 10 to 15 seconds. When the aqueous fluid of the base gel is maintained at an elevated temperature, such as when preheated solutions are employed having a temperature above 100°F (38°C), the crosslinking reaction occurs almost instantaneously upon introduction of the crosslinking agent into the base gel. Such rapid reaction rates do not permit the gelled fluid to be pumped into the subterranean formation before a significant increase in the viscosity of the fluid occurs.

The introduction of a selected retarding agent to the base gel prior to admixing the base gel and crosslinking agent provides a controllable delay in the rate of the crosslinking reaction. This retarded aqueous gel readily can be introduced through a conduit into a subterranean formation sought to be fractured as a result of its relatively low initial viscosity. The surprising discovery also has been made that admixing the crosslinking agent with an aqueous fluid and the retarding agent, preferably in predetermined amounts, produces a composition which can be used to delay the rate of the crosslinking reaction for a period of time sufficient to permit pumping of the aqueous gel through the conduit to the subterranean formation. Typically, this time can be from several minutes to hours in extremely deep formations. The significant increase in the viscosity of the gel through crosslinking as it reaches the lower portion of the conduit or upon entry into the formation facilitates the fracturing process through a reduction in the hydraulic horsepower necessary to effect the fracture.

The preferred retarding agents useful in the present invention are polyhydroxyl-containing compounds having from 3 to 7 carbon atoms. Examples of compounds useful herein include glycerol, erythritol, threitol, ribitol, arabinitol, xylitol, allitol, altritol, sorbitol, mannitol, dulcitol, iditol and perseitol. The carboxylic acids useful herein as retarding agents are citric acid, malic acid, succinic acid, tartaric acid, glucuronic acid, gluconic acid, ascorbic acid, alpha-keto glutaric acid, isoascorbic acid. The most preferred retarding agents for use in the invention are sorbitol and perseitol. The retarding agent can be in solid or liquid form when introduced into the aqueous fluid of the present invention.

The retarding agent useful herein is admixed with the aqueous fluid in an amount sufficient to provide a controlled delay in the crosslinking rate of the base gel when admixed with the crosslinking agent. The retarding agent can be used to delay the rate of the crosslinking reaction for a period of time sufficient to permit pumping of the aqueous gel through the conduit to the subterranean formations. Typically, this time can be from several minutes to hours in extremely deep formations. Typically, the concentration of retarding agent in the aqueous fluid is in the range of from about 0.001 to about 0.25 percent by weight of the aqueous fluid. The particular amount of retarding agent necessary to delay the crosslinking reaction will depend upon the specific gelling agent and crosslinking agent utilized as well as the equipment available at the wellhead and tubular goods which will affect the pumping rate of the aqueous gel into the formation. When the retarding agent is admixed with the base gel, preferably a liquid form of the retarding agent is employed, such as an aqueous solution, to facilitate mixing in the base gel.

Conventional propping agents can be employed with the fracturing fluid compositions of the present invention, examples of which are quartz sand grains, tempered glass beads, rounded walnut shell fragments, aluminum pellets, sintered bauxite, nylon pellets, and similar materials. Propping agents generally are used in concentrations in the range of from about 1 to about 10 pounds per gallon (0.12 to 1.12 g/cm$^3$) of the aqueous fluid; however, higher or lower concentrations may be used as required. The particle size of propping agent employed is a function of the nature of the formation to be fractured, the pressure required to produce the fracture, and pumping fluid flow rates available, as well as other known factors. However, particle sizes in the range of from about 200 to about 2 mesh on the U.S. Sieve Series scale (0.074 to 9.5 mm) can be employed in fracturing well formations with the compositions of the present invention.

The aqueous gel of the present invention can be prepared for use by mixing a predetermined quantity of the solvatable polysaccharide gelling agent and the retarding agent with a quantity of aqueous fluid to form a solvated gel. In the event the retarding agent is not added during solvation of the gelling agent, preferably the retarding agent that is mixed with the base gel is in the form of an aqueous solution to facilitate mixing. Any conventional batch mixing apparatus can be employed for this purpose. After the gelling agent, retarding agent and aqueous fluid have been mixed for a time sufficient to dissolve the retarding agent and form the base gel, a quantity of crosslinking agent is mixed with the gel. The mixture then is pumped into the wellbore and into the formation as the retarded crosslinking reaction takes place. Proppant generally is added to the base gel prior to addition of the crosslinking agent as the gel is introduced into the wellbore.

In an alternate embodiment of the invention, a retarded crosslinking composition is prepared by admixing the crosslinking agent, retarding agent and an aqueous fluid in predetermined amounts. The aqueous fluid utilized to formulate the retarded complexing composition can comprise substantially any aqueous solution which does not adversely react with the gelling agent, crosslinking agent or retarding agent. Preferably, the aqueous fluid comprises water. The constituents are generally admixed in a volumetric ratio of crosslinking agent to retarding agent to aqueous fluid in the range of from about 1:0.05:0.05 to about 1:10:10. Preferably, the ratio is in the range of from about 1:0.1:0.1 to about 1:4:4; and, most preferably, the ratio is about 1:0.5:0.5 to about 1:2:2. The constituents of the retarded crosslinking composition can be admixed in any order in any conventional mixing apparatus, such as for example, a batch mixer. When an aqueous-containing solution of the crosslinking compound is utilized, the aqueous portion is included in determining the total aqueous fluid content of the retarded crosslinking composition.

Surprisingly, it has been found that the high temperature rheological properties of the aqueous gels formed with the retarded crosslinking composition of the present invention improve when the retarded crosslinking composition is "aged" prior to use. The term "aged" as used herein is intended to mean that the admixture comprising the retarded crosslinking composition is held in an appropriate container after formulation for a period of from a few minutes to over several weeks prior to use. Preferably, the retarded crosslinking composition is aged for from about 2 to about 12 weeks. It has been found that when the retarded crosslinking composition is aged at a generally constant temperature, the initial crosslinking reaction rate declines while the high temperature viscosity of an aqueous gelled fluid crosslinked with the retarded crosslinking composition increases. When the retarded crosslinking composition is aged at a temperature above ambient, such as, an elevated temperature such as from about 80°F. (27°C.) to about 180°F. (82°C.), the rate of decline in the initial crosslinking reaction rate and rate of increase in the high temperature viscosity of the aqueous gelled fluid are enhanced. This permits the production of retarded crosslinking compositions having preselected properties by controlling the time and temperature of the aging.

The aqueous gel of this embodiment of the present invention then can be prepared for use by mixing a predetermined quantity of the solvatable polysaccharide gelling agent with a quantity of aqueous fluid to form a solvated gel. Any conventional batch mixing apparatus can be employed for this purpose. After the gelling agent and aqueous fluid have been mixed for a time sufficient to dissolve the gelling agent and form the base gel, a quantity of the retarded crosslinking composition is mixed with the gel. The mixture then is pumped into the wellbore and into the formation as the retarded crosslinking reaction takes place. Proppant generally is added to the base gel prior to addition of the retarded crosslinking composition as the gel is introduced into the wellbore.

Still yet another process for fracturing a subterranean formation penetrated by a well bore comprises injecting down the well bore and into the formation, at a pressure sufficient to fracture the formation, a fluid comprising an aqueous gel which is prepared by adding from about 30 to about 70 pounds (13.6 to 31.7 kg) of gelling agent comprising hydroxypropylguar to each 1,000 gallons (3.79 m$^3$) of aqueous fluid containing about 0 to about 10 percent by volume methanol. If desired, the pH of the aqueous fluid can be adjusted by the addition of a sufficient quantity of a buffering agent such as fumaric acid, formic acid or sodium bicarbonate. The base gel is introduced into the well bore and, as it is introduced, a sand proppant is introduced in an amount of from about 1 pound (0.45 kg) to about 8 pounds (3.62 kg) per gallon (3.78×10$^{-3}$m$^3$) and the retarded crosslinking composition then is introduced. The retarded crosslinking composition is comprised of an admixture of the various commercially available organotitanate chelates or aqueous-alcohol dilutions thereof, a polyhydroxyl-containing compound and an aqueous fluid in a volumetric ratio of about 1:1:1 and is introduced at the rate of 0.3 gallon (1.13×10$^{-3}$m$^3$) per each 10 pounds (4.53 kg) of gelling agent per each 1,000 gallons (3.78 m$^3$) of aqueous fluid.

The aqueous gel of this invention can be made over a wide pH range and be useful for fracturing subterranean formations. The rate at which the crosslinking reaction proceeds at normal temperatures (about 60°F. (15.6°C) to about 120°F. (48.9°C) in the absence of the retarding agent is a function of the pH of the base gel. The pH of the aqueous gel of this invention also has been found to affect the crosslinking rate but to a lesser extent which is believed to result from some type of a buffering effect or the like provided by the retarding agent. To assure that the crosslinking reaction takes place in the desired period of time, the pH of the aqueous fluid or of the base gel can be adjusted to a desired level within the range of from about pH 1.5 to about 10.5 and, preferably, to a level within the range of 6 to about 8 by the addition of a pH adjusting chemical. Since water from most sources is substantially neutral, the chemical or chemicals used for this purpose can be acids, acid buffers, mixtures thereof, or mixtures of acids and bases. Examples of suitable acids are hydrochloric acid, formic acid, fumaric acid, and phthalic acid. Examples of suitable buffers are potassium biphthalate, sodium hydrogen fumarate, and sodium bicarbonate. Examples of mixtures of acids and bases are fumaric acid and sodium fumarate, adipic acid and sodium bicarbonate, and fumaric acid and sodium carbonate.

A presently preferred process for fracturing a subterranean formation penetrated by a well bore comprises injecting down the well bore and into the formation, at a pressure sufficient to fracture the formation, a fluid comprising an aqueous gel which is prepared by adding from about 30 to about 70 pounds (13.6 to 31.7 kg) of gelling agent comprising hydroxypropylguar to each 1,000 gallons (3.78 m$^3$) of aqueous fluid containing about 0 to about 10 percent by volume methanol. During addition of the gelling agent from about 0.1 pounds (0.045 kg) to about 10 pounds (4.5 kg) of the retarding agent comprising sorbitol is added to each 1,000 gallons (3.78 m$^3$) of the aqueous fluid. If desired, the pH of the aqueous fluid first can be adjusted by the addition of a sufficient quantity of a buffering agent such as fumaric acid, formic acid or sodium bicarbonate. The base gel is introduced into the well bore and, as it is introduced, a sand proppant is introduced in an amount of from about 1 pound (0.45 kg) to about 8 pounds (3.6 kg) per gallon (3.8×10$^{-3}$m$^3$) and the crosslinking agent then is introduced. The crosslinking agent is comprised of various commercially available organotitanate chelates or aqueous-alcohol dilutions thereof and is introduced at the rate of 0.025 to 0.5 gallon ($0.095 \times 10^{-3}$ to $1.89 \times 10^{-3} m^3$) per each 10 pounds (4.53 kg) of gelling agent per each 1,000 gallons (3.78 $m^3$) of aqueous fluid.

Another process for fracturing a subterranean formation penetrated by a well bore comprises injecting down the well bore and into the formation, at a pressure sufficient to fracture the formation, a fluid comprising an aqueous gel which is prepared by adding from about 30 to about 70 pounds (13.6 to 31.7 kg) of gelling agent comprising hydroxypropylguar to each 1,000 gallons (3.78 $m^3$) of aqueous fluid containing about 0 to about 10 percent by volume methanol. During addition of the gelling agent from about 0.1 pounds (0.045 kg) to about 10 pounds (4.53 kg) of the retarding agent comprising citric acid is added to each 1,000 gallons (3.78 $m^3$) of the aqueous fluid. If desired, the pH of the aqueous fluid first can be adjusted by the addition of a sufficient quantity of a buffering agent such as fumaric acid, formic acid or sodium bicarbonate. The base gel is introduced into the well bore and, as it is introduced, a sand proppant is introduced in an amount of from about 1 pound to about 8 pounds per gallon and the crosslinking agent then is introduced. The crosslinking agent is comprised of various commercially available organotitanate chelates or aqueous-alcohol dilutions thereof.

Yet another process for fracturing a subterranean formation penetrated by a well bore comprises injecting down the well bore and into the formation, at a pressure sufficient to fracture the formation, a fluid comprising an aqueous gel which is prepared by adding from about 30 to about 70 pounds (13.6 to 31.7 kg) of gelling agent comprising hydroxypropylguar to each 1,000 gallons (3.78 $m^3$) of aqueous fluid containing about 0 to about 10 percent by volume methanol. If desired, the pH of the aqueous fluid can be adjusted by the addition of a sufficient quantity of a buffering agent such as fumaric acid, formic acid or sodium bicarbonate. The base gel is introduced into the well bore and, as it is introduced, a sand proppant is introduced in an amount of from about 1 pound (0.45 kg) to about 8 pounds (3.6 kg) per gallon ($3.78 \times 10^{-3} m^3$) and the retarded crosslinking composition then is introduced. The retarded crosslinking composition is comprised of an admixture of the various commercially available organotitanate chelates or aqueous-alcohol dilutions thereof, the retarding agent and an aqueous fluid in a ratio of about 1:1:1 to about 1:4:4 which is aged for at least about 30 minutes at 80°F. (26.7°C). The aged retarded crosslinking composition is introduced at the rate of 0.1 to 1.0 gallon ($0.38 \times 10^{-3}$ to $3.78 \times 10^{-3} m^3$) per each 10 pounds (4.53 kg) of gelling agent per each 1,000 gallons (3.78 $m^3$) of aqueous fluid.

After the aqueous gel has been pumped into the subterranean formation and a fracture has been formed, it is desirable to convert the gel into a low viscosity fluid so that it can be recovered from the formation through the well bore. This conversion often is referred to as "breaking" the gel. There are various methods available for breaking the aqueous gel of the present invention. The gels of the present invention break after passage of time and either or both the prolonged exposure to high temperatures. However, it is desirable to be able to predict breaking time within relatively narrow limits. Therefore, breakers optionally can be included in the crosslinked gel of the present invention. Mild oxidizing agents are useful as breakers when a gel is used in a relatively high temperature formation, although formation temperatures of 200°F. (93°C) or greater will generally break the gel relatively quickly without the aid of an oxidizing agent. A suitable oxidizing agent is ammonium per sulfate. For cross-linked gels used at temperatures below about 140°F. (60°C), enzymes are generally used as breakers. Suitable enzymes for such use are alpha and beta amylases, amyloglucosidase, oligoglucosidase, invertase, maltase, cellulase, and hemicellulase.

To further illustrate the present invention, the following examples are provided. It is to be understood that the examples are not intended to limit the scope of this invention.

Example I

In a first experiment, a total of 250 milliliters of 2 percent aqueous potassium chloride is placed in a one (1) liter blender jar, then 0.09 grams of fumaric acid and 0.3 grams of sodium bicarbonate are added to the jar while stirring. To this mixture is added 1.5 grams of hydroxypropyl guar gum while stirring the mixture. The solution is allowed to solvate at room temperature for 30 minutes to thereby form a base gel. To this base gel is added 1.0 milliliters of crosslinking agent comprising a solution consisting of equal volumes of 80 percent titaniumtriethanolamine chelate in isopropyl alcohol and deionized water. The gel is found to complex within about 15 seconds from the time of introduction of the organotitanate chelate.

A second experiment then is performed utilizing the same base gel to which is added 0.15 grams of sorbitol in an aqueous solution. The mixture is stirred for a sufficient time to incorporate the sorbitol solution in the base gel. To this base gel is added 1.0 milliliter of the crosslinking agent of the first experiment. The gel is observed and no apparent increase in viscosity is noted until after five (5) minutes have elapsed. A significant increase in the viscosity of the gel is noted after about seven (7) minutes.

The results of these experiments clearly illustrate the effectiveness of the retarding agent of the present invention.

Example II

A base gel is prepared by admixing 50 pounds (22.7 kg) of hydroxypropylguar per 1,000 gallons (3.78 $m^3$) of 2 percent potassium chloride solution together with 2.5 pounds (1.1 kg) of sodium bicarbonate and 2.5 pounds (1.1 kg) of fumaric acid per 1,000 gallons (3.78 $m^3$) of solution. The pH of the base gel is 5.95. Several tests then are performed in which aliquots of the base gel are admixed with quantities of a retarding agent which is diluted to various ratios with quantities of water in a Waring blender. The basic retarding agent comprises a 70 percent aqueous sorbitol solution. A crosslinking agent comprising a solution consisting of 80 percent titanium-triethanolamine chelate in isopropyl alcohol then is admixed with the base gel in the blender in a ratio of 0.5 ($1.9 \times 10^{-3} m^3$) gallon of crosslinking agent per 1,000 gallons ($3.78 \ m^3$) of solution in the aqueous gel. The base gel then is admixed in the blender at a speed sufficient to form the maximum vortex achievable without air entrainment and the time required for the complete closure of the vortex is measured. The time required for the vortex to close provides an indication of the time required to crosslink the base gel and is referred to hereinafter as the "crosslink time". The concentrations of the retarding agent, crosslinking agent and crosslink time are set forth in Table I, below.

TABLE I

| Test No. | Retarding agent dilution ratio with water (vol:vol) | Quantity of retarding agent solution used ($m^3/1000 \ m^3$ sol.) | Quantity of crosslinking agent used ($m^3/1000 \ m^3$ sol.) | Crosslink time (seconds) |
|---|---|---|---|---|
| 1 | 0:1 | 0.0 | 0.5 | 2* |
| 2 | 1:2 | 0.5 | 0.5 | 41 |
| 3 | 1:1 | 0.5 | 0.5 | 110 |
| 4 | 1:1/2 | 0.5 | 0.5 | 310 |
| 5 | 1:0 | 0.5 | 0.5 | >360 |

*No retarding agent present

These tests clearly illustrate the controlled delay which can be effected by use of the retarding agent in accordance with the present invention.

Example III

A base gel is prepared by admixing 50 pounds (22.7 kg) of hydroxypropylguar per 1,000 gallons (3.78 $m^3$) of water together with 2.5 pounds (1.13 kg) of fumaric acid and 10 pounds (4.53 kg) of sodium bicarbonate per 1,000 gallons (3.78 $m^3$) of solution. Several tests then are performed in which aliquots of the base gel are admixed with various quantities of the compounds comprising the retarding agent. A crosslinking agent comprising a solution consisting of 80 percent titaniumtriethanolamine chelate in isopropyl alcohol then is admixed with the base gel. The crosslink time then is determined as in Example II. The results of these tests are set forth in Table II, below.

## TABLE II

| Test No. | Retarding Agent | Concentration of Retarding Agent (lbs./1000 gal. solution kg/m$^3$) | | Crosslink Time (Sec.) |
|---|---|---|---|---|
| 1 | Perseitol | 5 | 0.6 | >300 |
| 2 | Perseitol | 2.5 | 0.3 | >600 |
| 3 | Perseitol | 1.25 | 0.15 | 51 |
| 4 | Dulcitol | 5 | 0.6 | >300 |
| 5 | Dulcitol | 2.5 | 0.3 | 158 |
| 6 | D$^{(+)}$ Arabinitol | 10 | 1.2 | 300 |
| 7 | D$^{(+)}$ Arabinitol | 5 | 0.6 | 80 |
| 8 | L$^{(-)}$ Arabinitol | 5 | 0.6 | 98 |
| 9 | Xylitol | 5 | 0.6 | 259 |
| 10 | Xylitol | 2.5 | 0.3 | 96 |
| 11 | Glycerol | 20 | 2.4 | 92 |
| 12 | Glycerol | 5 | 0.6 | 21 |

These results clearly illustrate the effectiveness of the hydroxyl-containing compounds comprising the retarding agent and the controlled delay that could be achieved by selecting various hydroxyl-containing compounds at various concentrations.

Example IV

A base gel is prepared by admixing 50 pounds (22.7 kg) of hydroxypropylguar per 1,000 gallons (3.78 m$^3$) of 2 percent potassium chloride solution together with 10 pounds (4.53 kg) of sodium bicarbonate and 2.5 pounds (1.13 kg) of fumaric acid per 1,000 gallons (3.78 m$^3$) of solution. Several tests then are performed in which aliquots of the base gel are admixed with quantities of the retarded crosslinking composition in a Jabsco pump operated at maximum RPM. The retarded crosslinking composition was prepared in various ratios and aged for various periods of time at 80°F. (26.6°C). The crosslinking compound comprised a solution consisting of 80 percent titanium-triethanolamine chelate in isopropyl alcohol. The polyhydroxyl-containing compound comprised glycerol and the aqueous fluid comprised water. The retarded crosslinking composition is admixed with the base gel in the Jabsco pump in a ratio of 0.3 gallon (1.13×10$^{-3}$m$^3$) of retarded crosslinking composition per 1,000 gallons (3.78 m$^3$) of solution in the aqueous gel. The base gel then is circulated through the pump to admix the retarded crosslinking composition with the base gel for a total of 10 minutes.

Thereafter a sample of the gelled fluid is placed in a Model 50 Fann viscometer and heated to the test temperature of 300°F (149°C) using the maximum heating rate under 300 psi (2.1 MPa) nitrogen gas. Once the test temperature is reached, viscosity readings are taken every 15 minutes for two hours. The data is set forth in Table III, below.

## TABLE III

| Test No. | Ratio crosslinking compound: polyhydroxyl-containing compound: aqueous fluid | Duration of ageing (hrs.) | Apparent viscosity cp (Pa s) 170 sec$^{-1}$ (time at 300°F (149°C), min.) | | | | | | | | |
|---|---|---|---|---|---|---|---|---|---|---|---|
| | | | 0 | 15 | 30 | 45 | 60 | 75 | 90 | 105 | 120 |
| 1 | 1:1:2 | 72 | 324 (.324) | 259 (.259) | 253 (.253) | 232 (.232) | 178 (.178) | 163 (.163) | 138 (.138) | 116 (.116) | 102 (.102) |
| 2 | 1:1:2 | 409 | 403 (.403) | 387 (.387) | 329 (.329) | 280 (.280) | 234 (.234) | 199 (.199) | 169 (.169) | 147 (.147) | 122 (.122) |
| 3 | 1:1:1 | 100 | 195 (.195) | 184 (.184) | 175 (.175) | 162 (.162) | 142 (.142) | 130 (.130) | 119 (.119) | 102 (.102) | 92 (.092) |
| 4 | 1:1:1 | 220 | 231 (.231) | 265 (.265) | 266 (.266) | 252 (.252) | 211 (.211) | 180 (.180) | 153 (.153) | 126 (.126) | 114 (.114) |
| 5 | 1:1:1 | 410 | 391 (.391) | 370 (.370) | 348 (.348) | 317 (.317) | 280 (.280) | 248 (.248) | 218 (.218) | 190 (.190) | 167 (.167) |
| 6 | 2:2:1 | 72 | 105 (.105) | 82 (.082) | 67 (.067) | 59 (.059) | 50 (.050) | 46 (.046) | 39 (.039) | 36 (.036) | 33 (.033) |
| 7 | 2:2:1 | 411 | 100 (.100) | 142 (.142) | 241 (.241) | 272 (.272) | 263 (.263) | 249 (.249) | 232 (.232) | 216 (.216) | 205 (.205) |

These tests clearly illustrate the controlled delay which can be effected by use of the retarded cross-linking composition of the present invention.

Example V

A base gel is prepared by admixing 50 pounds (22.7 kg) of hydroxypropylguar per 1,000 gallons (3.78 m³) of water together with 2.5 pounds (1.13 kg) of fumaric acid and 10 pounds (4.53 kg) of sodium bicarbonate per 1,000 gallons (3.78 m³) of solution. Aliquots of the base gel are admixed with a quantity of the retarded crosslinking composition containing various members of the group comprising the polyhydroxyl-containing compound. The cross-linking compound comprises a solution consisting of 80 percent titanium-triethanolamine chelate in isopropyl alcohol. The aqueous fluid comprises water. The volumetric ratio of crosslinking compound to polyhydroxyl-containing compound to aqueous is approximately 1:1:1, and the retarded crosslinking agent is aged about 1 hour. The crosslink time then is determined. The results of these tests are set forth in Table IV, below.

TABLE IV

| Test No. | Polyhydroxyl-Containing Compound | Crosslinking Time (Sec.) |
|---|---|---|
| 1 | —¹ | 21 |
| 2 | Perseitol | >300 |
| 3 | Sorbitol | >300 |
| 4 | Mannitol | 123 |
| 5 | Dulcitol | >300 |
| 6 | Xylitol | 259 |
| 7 | Adonitol | 58 |

¹ Crosslinking compound without polyhydroxyl-containing compound and aqueous fluid.

These results clearly illustrate the effectiveness of the retarded crosslinking compositions and the controlled delay that can be achieved by selecting various hydroxyl-containing compounds for use in the composition of the present invention.

Example VI

A retarded crosslinking composition is prepared in accordance with the present invention containing 91.25 gm. titanium-triethanolamine chelate, 44 gm., of a retarding agent comprising ascorbic acid and 91.25 gm. of water. This composition is permitted to age for two hours at a temperature of about 140°F. (60°C.).

A quantity of a base gel is prepared by the proportionate admixing of 50 lb. (22.7 kg) of hydroxypropylguar, 2.5 lb. (1.13 kg) fumaric acid, and 10 lb. (4.53 kg) sodium bicarbonate per 1,000 gallons (3.78 m³) of 2% potassium chloride solution. The base gel is prepared at a temperature of about 80°F. (27°C.).

A quantity of the aged composition is admixed with the base gel in a ratio of 1.5 gallons (5.7×10⁻³m³) per 1,000 gallons (3.78 m³) of base gel. The admixture then is heated to a temperature of about 140°F. (60°C.). The gel is found to crosslink in about two hours.

Example VII

A retarded crosslinking composition is prepared in accordance with the present invention containing 91.25 gm. titanium-triethanolamine chelate, 98.0 gm. of a retarding agent comprising gluconic acid (50% solution in water) and 91.25 gm. of water. This composition is aged for about two hours at a temperature of about 140°F. (60°C.).

A base gel is prepared as in Example I. A quantity of the aged composition is admixed with the base gel in a ratio of 1.5 gallons (5.7×10⁻³m³) per 1,000 gallons (3.78 m³) of base gel. The mixture then is heated to a temperature of about 140°F. (60°C.). The gel is found to crosslink in about twelve hours.

Example VIII

A base gel is prepared by admixing 50 lbs. (22.7 kg) of hydroxypropylguar, 2.5 lb. (1.13 kg) total acid (fumaric acid and retarding agent) and 10 lb. (4.53 kg) of sodium bicarbonate with 1,000 (3.78 m³) gallons of 2% potassium chloride solution. Portions of the base gel are admixed with a retarding agent in a Waring blender in the proportions set forth in Table I below. A crosslinking agent comprising titanium-triethanolamine diluted in a 1:1 ratio with water is admixed with the gel in the blender in a ratio of 1.0 gallon of crosslinking agent per 1,000 gallons (3.78 m³) of gel. The base gel then is admixed in the blender at a speed sufficient to form the maximum vortex achievable without air entrainment and the time required for complete closure of the vortex is measured. The time required for the vortex to close provides an indication of the time required to crosslink the base gel and is referred to hereafter as the "crosslink time". The time required for each portion is set forth in Table V, below.

TABLE V
Crosslinking time of retarded crosslinking agent in base gel

| Retarding agent, lb./1,000 gal. base gel | (kg/m³) | Crosslinking time, seconds |
|---|---|---|
| 0 | 0 | 25 |
| 0.25 | 0.03 | 233 |
| 0.50 | 0.06 | 587 |
| 1.0 | 0.12 | >600 |
| 2.0 | 0.24 | >600 |

The base gel samples containing no retarding agent and 0.5 lbs. (0.23 kg) of retarding agent/1,000 gallons (3.78 m³) of gel then were transferred from the Waring blender to a Model 50 FANN Viscometer, and the apparent viscosity of the samples was determined. The gel was heated in the viscometer to a temperature of about 300°F. (149°C.). The results are set forth in Table VI, below.

TABLE VI
Time-Temperature stability of gel

| Time at 300°F. (149°C.) minutes | Apparent viscosity, cp (Pa s) at 170 sec⁻¹ | | | |
|---|---|---|---|---|
| | No retarding agent | | 0.5 lbs./1,000 gal. (0.23 kg/3.78 m³) retarding agent | |
| | cp | (Pa s) | cp | (Pa s) |
| 0 | 170 | (.170) | 420 | (.420) |
| 15 | 155 | (.155) | 455 | (.455) |
| 30 | 145 | (.145) | 392 | (.392) |
| 45 | 135 | (.135) | 348 | (.348) |
| 60 | 125 | (.125) | 284 | (.284) |
| 75 | 117 | (.117) | 240 | (.240) |
| 90 | 110 | (.110) | 197 | (.197) |
| 105 | 102 | (.102) | 161 | (.161) |
| 120 | 95 | (.095) | 130 | (.130) |

The results of the tests clearly illustrate the effectiveness of the retarding agent in the practice of one method of the present invention.

**Claims**

1. An aqueous gel comprising: an aqueous fluid comprising water and, optionally, up to 80 percent by volume of alcohol; a gelling agent comprising a solvatable polysaccharide of molecular weight not less

11

## 0 104 927

than 100,000; and a crosslinking agent comprising an organotitanate chelate; characterised in that the gel further comprises a retarding agent comprising at least one polyhydroxyl-containing compound capable of retarding the action of said crosslinking agent upon said gelling agent, or one or more of citric acid, malic acid, succinic acid, tartaric acid, glucuronic acid, gluconic acid, ascorbic acid, alpha-keto glutaric acid, or isoascorbic acid; and wherein the amount of gelling agent is not less than 0.2% by weight of the aqueous fluid.

2. A gel according to claim 1, wherein said gelling agent comprises a solvatable polysaccharide selected from glucomannans, galactomannans and derivatives thereof.

3. A gel according to claim 1 or 2, wherein said crosslinking agent is titanium-triethanolamine chelate, titanium acetylacetonate chelate or titanium-ammonium lactate chelate.

4. A gel according to claim 1, 2 or 3, wherein said retarding agent comprises a polyhydroxyl-containing compound having from 3 to 7 carbon atoms.

5. A gel according to any of claims 1 to 3, wherein said polyhydroxyl-containing compound is glycerol, erythritol, threitol, ribitol, arabinitol, xylitol, allitol, altritol, sorbitol, mannitol, dulcitol, iditol or perseitol.

6. A process for hydraulically fracturing a subterranean formation penetrated by a well bore which comprises: preparing a base gel by mixing an aqueous fluid comprising water and, optionally, up to 80 percent by volume of alcohol, with a gelling agent comprising a solvatable polysaccharide of molecular weight not less than 100,000; admixing therewith a crosslinking composition comprising:

(i) at least one crosslinking agent comprising an organotitanate chelate; and

(ii) an aqueous fluid; and introducing said cross-linked aqueous gel into said formation from said well bore at a flow rate and pressure sufficient to produce a fracture in said formation; characterised in that the crosslinking composition also comprises

(iii) a retarding agent comprising at least one polyhydroxyl compound capable of retarding the action of said crosslinking agent upon said gelling agent, or one or more of citric acid, malic acid, succinic acid, tartaric acid, glucuronic acid, gluconic acid, ascorbic acid, alpha-keto glutaric acid, or isoascorbic acid; and wherein the amount of gelling agent is not less than 0.2% by weight of the aqueous fluid, and wherein said base gel reacts with said crosslinking agent after a controllable period of time form a crosslinked aqueous gel, at least a portion of the delay in the rate of said reaction resulting from the presence of said retarding agent and aqueous fluid in said crosslinking composition.

7. A process according to claim 6, wherein said gelling agent comprises one or more solvatable polysaccharides selected from guar gum, locust bean gum, karaya gum, sodium carboxymethylguar, hydroxyethylguar, sodium carboxymethylhydroxyethylguar, hydroxypropylguar, and sodium carboxymethylhydroxypropylguar.

8. A process according to claim 6 or 7, wherein said crosslinking compound comprises titanium-triethanolamine chelate, titanium-ammonium lactate chelate, or titanium-acetylacetonate chelate.

9. A process according to claim 6, 7 or 8, wherein said retarding agent comprises at least one of glycerol, erythritol, threitol, ribitol, arabinitol, xylitol, allitol, altritol, sorbitol, mannitol, dulcitol, iditol or perseitol.

10. A process according to claim 6, 7, 8 or 9, wherein said crosslinking agent, retarding agent and aqueous fluid of said retarded crosslinking composition are present in a ratio, respectively, of from 1:0.05:0.5 to 1:10:10, and said retarded crosslinking composition is aged for a period of from about 2 to about 12 weeks.

**Patentansprüche**

1. Wäßriges Gel, enthaltend eine wäßrige Flüssigkeit aus Wasser und wahlweise bis zu 80 Vol.-% Alkohol, einen Gelbildner aus einem lösbaren Polysaccharid mit einem Molekulargewicht nicht unter 100 000, und einem Vernetzungsmittel aus einem Organotitanchelat, dadurch gekennzeichnet, daß das Gel ferner ein Verzögerungsmittel, das wenigstens eine Polyhydroxyverbindung enthält, welche fähig ist, die Wirkung des Vernetzungsmittels auf den Gelbildner zu verzögern, oder eine oder mehrere der Säuren Zitronensäure, Apfelsäure, Bernsteinsäure, Weinsäure, Glucuronsäure, Gluconsäure, Ascorbinsäure, α-Ketoglutarsäure oder Isoascorbinsäure enthält und daß die Menge des Gelbildners nicht weniger als 0,2 Gew.-% der wäßrigen Flüssigkeit beträgt.

2. Ein Gel, dadurch gekennzeichnet, daß der Gelbildner ein lösbares Polysaccharid aus der Gruppe Glucomannane, Galactomannane und deren Derivate ist.

3. Ein Gel nach Anspruch 1 oder 2, dadurch gekennzeichnet, daß das Vernetzungsmittel Titan-Triethanolaminchelat, Titan-Acetylacetonchelat oder Titan-Ammoniumlactatchelat ist.

4. Ein Gel nach Anspruch 1, 2 oder 3, dadurch gekennzeichnet, daß das Verzögerungsmittel eine Polyhydroxyverbindung mit 3 bis 7 Kohlenstoffatomen ist.

5. Ein Gel nach einem der Ansprüche 1 bis 3, dadurch gekennzeichnet, daß die Polyhydroxyverbindung Glyzerin, Erythritol, Threitol, Ribitol, Arabinitol, Xylitol, Allitol, Altritol, Sorbitol, Mannitol, Dulcitol, Iditol oder Perseitol ist.

6. Verfahren zum hydraulischen Aufbrechen einer unterirdischen, von einem Bohrloch durchsetzten Formation, bei dem ein Basisgel durch Mischen einer wäßrigen Flüssigkeit aus Wasser und wahlweise bis zu 80 Vol.-% Alkohol mit einem Gelbildner, der ein lösbares Polysaccharid mit einem Molekulargewicht nicht unter 100 000 enthält, hergestellt wird, dem Basisgel eine vernetzende Zusammensetzung zugemischt wird, die

(1) wenigstens ein ein Organotitanchelat enthaltendes Vernetzungsmittel und

(2) eine wäßrige Flüssigkeit enthält, und das vernetzte wäßrige Gel von dem Bohrloch aus in die Formation mit einer Fließgeschwindigkeit und unter einem Druck eingebracht wird, die ausreichen, in der Formation einen Spalt zu erzeugen, dadurch gekennzeichnet, daß die vernetzende Zusammensetzung ebenfalls

(3) ein Verzögerungsmittel aus wenigstens einer Polyhydroxyverbindung, die fähig ist, die Wirkung des Vernetzungsmittels auf den Gelbildner zu verzögern, oder eine oder mehrere der Säuren Zitronensäure, Apfelsäure, Bernsteinsäure, Weinsäure, Glucuronsäure, Gluconsäure, Ascorbinsäure, α-Ketoglutarsäure, oder Isoascorbinsäure enthält, daß die Menge an Gelbildner nicht weniger als 0,2 Gew.-% der wäßrigen Flüssigkeit beträgt und daß das Basisgel nach einer steuerbaren Zeitdauer mit dem Vernetzungsmittel zu einem vernetzten wäßrigen Gel reagiert, wobei wenigstens ein Teil der Verzögerung der Reaktionsgeschwindigkeit auf der Anwesenheit des Verzögerungsmittels und der wäßrigen Flüssigkeit in der vernetzenden Zusammensetzung beruht.

7. Verfahren nach Anspruch 6, dadurch gekennzeichnet, daß der Gelbildner wenigstens ein oder mehrere lösbare Polysaccharide aus der Gruppe Guargummi, Robinienbohnengummi, Karayagummi, Natriumcarboxymethylguar, Hydroxyethylguar, Natriumcarboxymethylhydroxyethylguar, Hydroxypropylguar and Natriumcarboxymethylhydroxypropylguar enthält.

8. Verfahren nach Anspruch 6 oder 7, dadurch gekennzeichnet, daß das Vernetzungsmittel Titan-Triethanolaminchelat, Titan-Ammoniumlactatchelat oder Titan-Acetylacetonatchelat enthält.

9. Verfahren nach Anspruch 6, 7 oder 8, dadurch gekennzeichnet, daß das Verzögerungsmittel wenigstens eine der Verbindungen Glyzerin, Erythritol, Threitol, Ribitol, Arabinitol, Xylitol, Allitol, Altritol, Sorbitol, Mannitol, Dulcitol, Iditol oder Perseitol enthält.

10. Verfahren nach Anspruch 6, 7, 8 oder 9, dadurch gekennzeichnet, daß das Vernetzungsmittel, das Verzögerungsmittel und die wäßrige Flüssigkeit in der verzögerten vernetzenden Zusammensetzung in einem Verhältnis im Bereich von 1:0,05:0,5 bis 1:10:10 vorliegen und daß die verzögerte vernetzende Zusammensetzung über einen Zeitraum im Bereich von 2 bis 12 Wochen gealtert wird.

## Revendications

1. Gel aqueux comprenant: un fluide aqueux comprenant de l'eau et, éventuellement, jusqu'à 80% en volume d'alcool; un agent gélifiant comprenant un polysaccharide solvatable d'un poids moléculaire qui n'est pas inférieur à 100.000; et un agent de réticulation comprenant un chélate de type organotitanate; caractérisé en ce que le gel comprend en outre un agent retardateur comportant au moins un composé polyhydroxylé capable de retarder l'action dudit agent de réticulation sur ledit agent gélifiant, ou au moins un composé choisi parmi l'acide citrique, l'acide malique, l'acide succinique, l'acide tartrique, l'acide glucuronique, l'acide gluconique, l'acide ascorbique, l'acide alpha-céto glutarique ou l'acide isoascorbique, et dans lequel la quantité d'agent gélifiant n'est pas inférieure à 0,2% du poids du fluide aqueux.

2. Gel suivant la revendication 1 dans lequel ledit agent gélifiant comprend un polysaccharide solvatable choisi parmi les glucomannanes, les galactomannanes et leurs dérivés.

3. Gel suivant la revendication 1 ou 2, dans lequel ledit agent de réticulation est un chélate de triéthanolaminetitane, un chélate d'acétylacétonate de titane ou un chélate de lactate d'ammonium-titane.

4. Gel suivant la revendication 1, 2 ou 3, dans lequel ledit agent retardateur comprend un composé polyhydroxylé ayant de 3 à 7 atomes de carbone.

5. Gel suivant l'une quelconque des revendications 1 à 3, dans lequel ledit composé polyhydroxylé est du glycérol, de l'érythritol, du thréitol, du ribitol, de l'arabinitol, du xylitol, de l'allitol, de l'altritol, du sorbitol, du mannitol, du dulcitol, de l'iditol ou du perséitol.

6. Procédé pour fracturer hydrauliquement une formation souterraine pénétrée par un puits de forage, dans lequel on prépare un gel de base en mélangeant un fluide aqueux comprenant de l'eau et éventuellement jusqu'à 80% de volume d'alcool, avec un agent gélifiant, comprenant un polysaccharide solvatable ayant un poids moléculaire d'au moins environ 100.000; on mélange avec celui-ci, une composition réticulante comprenant:

(i) au moins un agent de réticulation comprenant un chélate de type organotitanate, et

(ii) un fluide aqueux, et on introduit ledit gel aqueux réticulé à l'intérieur de ladite formation à partir dudit puits de forage à un débit et à une pression suffisants pour ménager une fracture dans ladite formation; caractérisé en ce que la composition réticulante comprend également

(iii) un agent retardateur comprenant au moins un composé polyhydroxylé capable de retarder l'action dudit agent de réticulation sur ledit agent gélifiant, ou au moins un composé choisi parmi l'acide citrique, l'acide malique, l'acide succinique, l'acide tartrique, l'acide glucuronique, l'acide gluconique, l'acide ascorbique, l'acide alpha-céto-glutarique ou l'acide isoascorbique, la quantité d'agent gélifiant n'étant pas inférieure à 0,2% du poids du fluide aqueux, et dans lequel on fait réagir ledit gel de base avec ledit agent de réticulation après une période de temps ajustable pour former un gel aqueux réticulé, au moins une partie du ralentissement de la vitesse de ladite réaction étant due à la présence dudit agent retardateur et du fluide aqueux dans ladite composition réticulante.

7. Procédé suivant la revendication 6, dans lequel ledit agent gélifiant comprend au moins un polysaccharide solvatable choisi parmi la gomme de guar, la gomme de caroube, la gomme de sterculia, le carboxyméthylguar sodique, l'hydroxyéthylguar, le carboxyméthylhydroxyéthylguar sodique, l'hydroxypropylguar et le carboxyméthylhydroxypropylguar sodique.

8. Procédé suivant la revendication 6 ou 7, dans lequel ledit composé réticulant comprend un chélate de triéthanolamine-titane, un chélate de lactate d'ammonium-titane ou un chélate d'acétylacétonate de titane.

9. Procédé suivant la revendication 6, 7 ou 8 dans lequel ledit agent retardateur comprend au moins un composé choisi parmi le glycérol, l'érithrytol, le thréitol, le ribitol, l'arabinitol, le xylitol, l'allitol, l'altritol, le sorbitol, le mannitol, le dulcitol, l'iditol ou le perséitol.

10. Procédé suivant la revendication 6, 7, 8 ou 9 dans lequel ledit agent de réticulation, l'agent retardateur et le fluide aqueux de ladite composition réticulante retardée, sont respectivement présents suivant un rapport de 1:0,05:0,5 à 1:10:10, et l'on fait vieillir ladite composition réticulante retardée pendant un temps d'environ 2 à environ 12 semaines.